(19) Europäisches Patentamt
European Patent Office
Office européen des brevets

(11) Publication number: **0 525 940 A2**

# (12) EUROPEAN PATENT APPLICATION

(21) Application number: **92304543.9**

(51) Int. Cl.[5]: **C08G 59/50**

(22) Date of filing: **20.05.92**

(30) Priority: **29.07.91 US 736842**

(43) Date of publication of application:
**03.02.93 Bulletin 93/05**

(84) Designated Contracting States:
**DE FR GB**

(71) Applicant: **TEXACO CHEMICAL COMPANY**
**3040 Post Oak Boulevard**
**Houston, Texas 77056(US)**

(72) Inventor: **Su, Wei-Yang**
**11814 Knights Bridge**
**Austin, Texas 78759(US)**
Inventor: **Waddill, Harold George**
**8712 Bluegrass**
**Austin Texas 78759(US)**

(74) Representative: **Brock, Peter William et al**
**UROUHART-DYKES & LORD 91 Wimpole Street**
**London W1M 8AH(GB)**

## (54) Curable epoxy resin compositions.

(57) Epoxy resins can be cured by complexes of lactones with imidazoles.
Preferred lactones are:

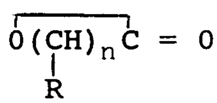

in which n is from 2 to 5 and each R, which may be the same or different, is hydrogen or alkyl having 1 to 18 carbon atoms.

Preferred imidazoles are:

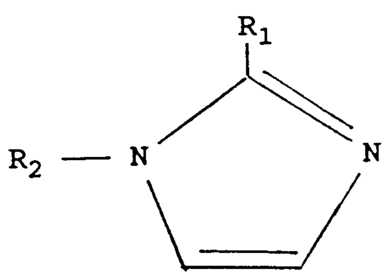

wherein $R_1$ is hydrogen, alkyl having 1 to 18 carbon atoms, or aryl, and $R_2$ is alkyl having 1 to 18 carbon atoms.

The complexes are less reactive than the imidazole used alone, making them suitable for use in applications where an extended working time is needed.

EP 0 525 940 A2

Rank Xerox (UK) Business Services

This invention relates to curable epoxy resin compositions.

Epoxy resins constitute a broad class of polymeric materials having a wide range of physical properties. The resins are characterised by epoxide groups, which are cured by reaction with curing agents to provide cured epoxy resin compositions with various desirable properties. The most common epoxy resins are condensation products of epichlorohydrin and Bisphenol A.

Substituted imidazoles have been used as curing agents for epoxy resins, for instance, US-A-4931528 discloses 1-isopropyl-2-methyl imidazole as a curing agent for epoxy resins curative.

The need to extend the working time of compositions containing substituted imidazole has become apparent, so as to utilize properly the desirable properties of the imidazole curing agent for applications such as filament winding.

The object of this invention is to provide curable epoxy resin compositions having extended pot life.

The invention comprises a curable epoxy resin composition comprising an epoxy resin and a curing agent. The curing agent comprises a lactone-imidazole complex, comprising a lactone and an imidazole in a mole ratio of 1:5 to 5:1.

The invention also provides a method of forming a cured epoxy resin product by exposing the above-defined curable compositions to curing conditions, e.g. a temperature of 60 to 250° C for 1 to 36 hours.

These compositions exhibit extended pot life (working time) over the imidazole used alone as a curing agent. This extended pot life makes the composition useful for applications such as filament windings.

The imidazole component of the composition has the general formula:

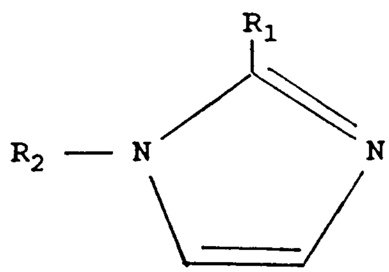

in which $R_1$ is hydrogen alkyl having 1 to 18 carbon atoms, or aryl and $R_2$ is an alkyl radical having 1 to 18 carbon atoms.

The synthesis of these compounds is taught by US-A-4927942 and US-A-4921969, which teach that an imidazole can be prepared by reacting a diamine with an organic acid to form an imidazoline. For example, N-isopropylethylene diamine is reacted with acetic acid to form 1-isopropyl-2-methyl imidazoline. The imidazoline is catalytically dehydrogenated to obtain the imidazole, which can be isolated by vacuum.

According to this method, a series of imidazoles were synthesized and identified, including:

1-isopropyl-2-methyl imidazole,
1-isopropyl-2-phenyl imidazole,
1-isopropyl-2-tolyl imidazole,
1,2-dimethyl imidazole, and
1-methyl imidazole.

The synthesis of lactones is well known in the art. For example, from US-A-2301827 and US-A-3155686. In general, a lactone is an internal ester of a carboxylic acid. In a molecule comprising an aliphatic chain with carboxy and hydroxy substituents separated by 2 to 5 or more carbon atoms, a proton donor catalyzes the formation of the cyclic ester with the elimination of water. The reaction is generally represented as follows:

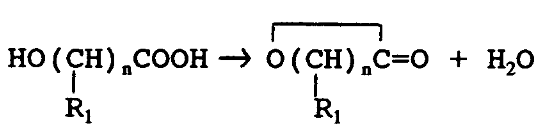

wherein n is 2 to 5, or a greater number, and $R_1$ is hydrogen or alkyl having 1 to 18 carbon atoms, or mixture thereof.

Suitable proton donors include concentrated mineral acids such as sulphuric acid and perchloric acid

and solid acid catalysts such as sulphonic acid ion exchange resins. Organic acids such as p-toluene sulphonic acid hydrate have been used, as well as electron acceptors, such as boron trifluoride and boron trifluoride etherate. The proton donor electron acceptor is provided in an amount of 1 to 2 moles per mole of carboxylic acid.

The lactonization reaction is carried out, preferably at a temperature of about 100 ° C, while removing water to maintain the reaction mixture essentially anhydrous. The reaction is continued under these conditions for sufficient time to effect the conversion of a substantial portion of reactant into lactone. It is convenient to follow the progress of the reaction by withdrawing samples during the reaction and subjecting them to infrared analysis. For example, the formation of 5- and 6- member ring lactone reaction products is shown by infrared analysis in the 5.66 and 5.78 micro meter regions. Thus, by utilizing the infrared analysis or correlated reaction times, the length of time to achieve the reaction product is determined. This time may range up to 5 hours. Experience has shown that catalyst concentration and reaction temperature can be varied to produce essentially complete reaction in about 1 hour, which is efficient and economic for a laboratory scale preparation.

The reaction mixture is diluted with non-polar solvent to reduce its viscosity and filtered. The lactone is recovered by vacuum distillation, e.g., 80 ° C and 266 Pa (2mm Hg) pressure.

According to this method a number of lactones can be synthesized including:

beta-butyrolactone,
gamma-butyrolactone,
epilson-caprolactone,
gamma-caprolactone,
beta-propiolactone,
delta-valerolactone,
gamma-lactone, and
pantolactone.

The lactone:imidazole complex is formed by mixing the lactone with the imidazole in the desired mole ratio, for example, 1:5 to 10:1. The preferred ratio is 1:2 to 3:1, most preferably 1:1 to 2:1. The mixing is conducted at room temperature with spontaneous formation of the complex. For example, the lactone and imidazole can be mixed with a mechanical mixer in a stainless steel vessel at 20 to 25 ° C (68 ° F to 77 ° F) for one-half to one minute.

In forming an epoxy resin product, the lactone-imidazole complex curing agent is mixed in an effective curing amount with an epoxy resin. This can be accomplished by adding the epoxy resin to the curing agent in the same vessel in which the lactone-imidazole complex was synthesized. The components are mixed by stirring until a homogenous mixture is formed. This lactone-imidazole mixture has a slower reaction time than the imidazole-epoxy resin mixture. The pot life is therefore useful in applications which require an extended pot life, such as filament winding.

The curing agent is added to the formulation in an amount that achieves desired properties. The proper amount of curing agent to provide best properties is usually determined by the preparation of a number of samples which are tested to determine the composition with the most desirable physical characteristics. Typically, the physical property maximized is either the glass transition point (Tg) according to STM D-3418 or the heat deflection temperature (HDT) according to ASTM D-648.

Curing may be accomplished at ambient conditions. For development of optimum achievable properties, however, curing at elevated temperature may be necessary. The curing temperature range generally acceptable in this invention is from 60 to 250 ° C for 1 to 36 hours.

Generally the vicinal polyepoxide compounds are organic materials having an average of at least 1.8 reactive 1,2-epoxy groups per molecule. These polyepoxide materials can be monomeric or polymeric, saturated or unsaturated, aliphatic, cycloaliphatic, aromatic or heterocyclic, and may be substituted, if desired, with other substituents besides the epoxy groups, e.g., hydroxyl groups, ether radicals, and aromatic halogen atoms. These materials typically have an epoxy equivalent weight of 150 to 250.

Preferred polyepoxides are glycidyl ethers prepared by epoxidizing the corresponding allyl ethers, or reacting, by known procedures, a molar excess of epichlorohydrin and an aromatic polyhydroxy compound, i.e., isopropylidene bisphenol, novolac, resorcinol, derivatives, or aromatic amines. The epoxy derivatives of methylene or isopropylidene bisphenols are especially preferred.

A widely used class of polyepoxides which are useful according to the present invention includes the resinous epoxy polyethers obtained by reacting an epihalohydrin, such as epichlorohydrin, with either a polyhydric phenol or a polyhydric alcohol. Typically the epoxy resins have an average of at least 1.8 reactive, 1,2-epoxy groups per molecule. An illustrative, but by no means exhaustive, listing of suitable dihydric phenols includes:

4,4'-isopropylidene bisphenol,
2,4'-dihydroxydiphenylethylmethane,
3,3'-dihydroxydiphenyldiethylmethane,
3,4'-dihydroxydiphenylmethylpropylmethane,
2,3'-dihydroxydiphenylethylphenylmethane,
4,4'-dihydroxydiphenylpropylphenylmethane,
4,4'-dihydroxydiphenylbutylphenylmethane,
2,2'-dihydroxydiphenylditolylmethane, and
4,4'-dihydroxydiphenyltolylmethylmethane.

Other polyhydric phenols which may also be reacted with an epihalohydrin to provide these epoxy polyethers are such compounds as resorcinol, hydroquinone, and substituted hydroquinones, e.g., methylhydroquinone.

Among the polyhydric alcohols which can be reacted with an epihalohydrin to provide these resinous epoxy polyethers are such compounds as ethylene glycol, propylene glycols, butylene glycols, pentane diols, bis-(4-hydroxycyclohexyl) dimethylmethane, 1,4-dimethylolbenzene, glycerol, 1,2,6-hexanetriol, trimethylolpropane, mannitol, sorbitol, erythritol, pentaerythritol, their dimers, trimers and higher polymers, e.g., polyethylene glycols, polypropylene glycols, triglycerol, or dipentaerythritol, polyallyl alcohol, and polyhydric thioethers, such as 2,2'-,3,3'-tetrahydroxydipropylsulfide, mercapto alcohols such as monothioglycerol, and dithioglycerol, polyhydric alcohol partial esters, such as monostearin and pentaerythritol monoacetate, and halogenated polyhydric alcohols such as the monochlorohydrins of glycerol, sorbitol and pentaerythritol.

Another class of polymeric polyepoxides which can be used in accordance with the present invention includes the epoxy novolac resins obtained by reacting, preferably in the presence of a basic catalyst, e.g., sodium or potassium hydroxide, an epihalohydrin, such as epichlorohydrin, with the resinous condensate of an aldehyde, e.g., formaldehyde, and either a monohydric phenol, e.g., phenol itself, or a polyhydric phenol. Further details concerning the nature and preparation of these epoxy novolac resins can be obtained from Lee, H. and Neville, K., Handbook of Epoxy Resins, McGraw Hill Book Co., New York, 1967.

Those skilled in the art will appreciate that the polyepoxide compositions which are useful according to the practice of the present invention are not limited to those containing the above described polyepoxides, but that these polyepoxides are provided here merely as being representative of the class of polyepoxides as a whole.

Preferably, the base resin, which has an epoxide equivalent weight of from 175 to 195, is obtained by condensing epichlorohydrin with 2,2-bis-(p-hydroxyphenyl propane) (i.e. bisphenol A), to form 2,2-bis-[(p-2,3 epoxy propoxy)phenyl] propane.

## EXAMPLE 1

Lactone-imidazole complexes were prepared by mixing the imidazole with the lactone at room temperature. The imidazoles used were as follows:

| | |
|---|---|
| 1-isopropyl-2 methyl imidazole | (IPMI) |
| 1-isopropyl-2 phenyl imidazole | (IPPI) |
| 1-isopropyl-2 o-tolyl imidazole | (IPTI) |
| 1,2-dimethyl imidazole | (DMI) |
| 1-methyl imidazole | (MI) |

The complexes prepared are listed below:

| | lactone | imidazole | mole ratio lactone:imidazole |
|---|---|---|---|
| a. | beta-butyrolactone | IPMI | 1:1 |
| b. | gamma-butyrolactone | IPMI | 1:1 |
| c. | beta-butyrolactone | IPMI | 2:1 |
| d. | gamma-butyrolactone | IPMI | 2:1 |
| e. | epilson-caprolactone | IPMI | 1:1 |
| f. | gamma-caprolactone | IPMI | 1:1 |
| g. | epilson-caprolactone | IPMI | 2:1 |
| h. | gamma-butyrolactone | IPPI | 1:1 |
| I. | epilson-caprolactone | IPPI | 1:1 |
| j. | gamma-butyrolactone | IPPI | 1:1 |
| k. | epilson-caprolactone | IPPI | 1:1 |
| l. | epilson-caprolactone | DMI | 1:1 |
| m. | epilson-caprolactone | MI | 1:1 |

These lactone-imidazole complexes were reacted with a liquid epoxy resin of 185 to 192 equivalent epoxy weight (EEW).

## EXAMPLE 2

A series of formulations A to G, having the compositions set out below were prepared, in order to test their reactivity of 1-isopropyl-2-methyl imidazole-lactone complexes with epoxy resin. The formulations and their reactivity are set out in Table 1 below.

TABLE 1

| | A | B | C | D | E | F | G |
|---|---|---|---|---|---|---|---|
| Formulation - parts by weight | | | | | | | |
| Liquid epoxy resin (EEW 185-192) | 100 | 100 | 100 | 100 | 100 | 100 | 100 |
| 1-Isopropyl-2-methylimidazole (IPMI) | 2 | - | - | - | - | - | - |
| IPMI-beta-Butyrolactone Complex | | | | | | | |
| 1:1 molar | - | 3 | - | - | - | - | - |
| 1:2 molar | - | - | 3 | - | - | - | - |
| IPMI-gamma-Butyrolactone Complex | | | | | | | |
| 1:1 molar | - | - | - | 2 | - | - | - |
| 1:2 molar | - | - | - | - | 2 | - | - |
| IPMI-epsilon-Caprolactone Complex | | | | | | | |
| 1:1 molar | - | - | - | - | - | 2 | - |
| 1:2 molar | - | - | - | - | - | - | 4 |
| Reactivity | | | | | | | |
| Time to double viscosity @ 23°C, h. | ~16 | ~28 | ~32 | ~24 | ~28 | ~22 | ~20 |
| Gel time, min. @ 80°C | 38.5 | 48.5 | 78.3 | 84.6 | 69.8 | 68.7 | 46.7 |
| (100g. mass) 120°C | 14.0 | 12.6 | 16.0 | 15.0 | 15.6 | 19.4 | 14.7 |
| 150°C | 8.0 | 7.4 | 8.8 | 10.6 | 8.5 | 20.3 | 8.8 |

Each of the IPMI-lactone complexes was less reactive towards an epoxy resin than was IPMI alone. Viscosity increase was slowed with the lactone complexes, thus extending functional working time for these formulations. Gel times at a low temperature (80° C), a temperature too low for complete curing of these formulations, were also longer for the systems cured with the lactone complexes. However, at higher temperatures (120° and 150° C), reaction with the complexes was rapid, and much like that with IPMI used by itself. Thus, use of the lactone complexes results in a more stable curing system at normal ambient temperatures but allows rapid curing at temperatures required to achieve complete reaction.

The properties of epoxy resins cured with the above-mentioned 1-isopropyl-2-methyl imidazole-lactone complexes are set out below in Table 2. The properties were measured on 3mm (1/8 inch) castings cured for 2 hours at 100° C and 4 hours at 210° C.

TABLE 2

| Formulation | A | B | C | D | E | F | G |
|---|---|---|---|---|---|---|---|
| Shore D Hardness, 0-10 sec. | 88-87 | 90-87 | 91-89 | 88-86 | 90-88 | 94-91 | 93-90 |
| HDT, °C, at 1.96 MPa | 195.1 | 188.5 | 182.4 | 241.8 | 162.3 | 160.3 | 172.5 |
| Izod Impact strength, J/m | 3.2 | 4.3 | 2.1 | 2.1 | 1.6 | 2.7 | 1.6 |
| Tensile strength, MPa | 18.6 | 33.1 | 29.0 | 26.9 | 27.6 | 16.5 | 20.0 |
| Tensile modulus, MPa | 2861 | 2744 | 2668 | 2956 | 2524 | 3785 | 3592 |
| Elongation at break % | 0.7 | 1.5 | 1.2 | 1.0 | 1.1 | 0.6 | 0.8 |
| Flexural strength, MPa | 51.0 | 49.6 | 40.0 | 59.3 | 65.5 | 69.0 | 65.5 |
| Flexural modulus, MPa | 2465 | 2410 | 2496 | 2579 | 2668 | 2875 | 2503 |
| % wt. gain, 24-h. water boil | 1.20 | 1.34 | 1.46 | 1.33 | 0.96 | 0.95 | 1.40 |
| 3-h. acetone boil | 0.00 | 0.02 | 0.13 | 0.09 | 0.05 | 0.11 | 0.18 |
| Compression strength, MPa | | | | | | | |
| at yield | 102.7 | 100.7 | 101.4 | 107.6 | 104.8 | 102.7 | 100.0 |
| at failure | 188.2 | 158.6 | 151.7 | 195.1 | 171.0 | 188.9 | 186.9 |
| % compression at yield | 12.7 | 13.5 | 12.7 | 13.2 | 12.2 | 12.6 | 12.2 |
| at failure | 28.9 | 28.1 | 25.8 | 31.2 | 28.5 | 30.4 | 30.7 |
| Modulus, MPa | 1372 | 1294 | 1342 | 1376 | 1399 | 1489 | 1380 |

Properties of epoxy cures with imidazole lactone complexes were not substantially different from those of cures with IPMI alone. Generally, slightly lowered HDT values were noted (one higher HDT; with 1:1 molar beat-butyrolactone complex) and slightly greater susceptibility to moisture (boiling water) and chemical attack (boiling acetone). This was not found in all cases. Other physical properties were either improved or were unaffected.

## EXAMPLE 3

A series of 1-isopropyl-2-phenyl imidazole-lactone complexes was prepared. Their constitution and reactivity are set out in Table 3 below.

TABLE 3

| Formulation - parts by weight | H | J | K |
|---|---|---|---|
| Liquid epoxy resin (EEW 185-192) | 100 | 100 | 100 |
| 1-Isopropyl-2-phenylimidazole (IPPI) | 2 | - | - |
| IPPI-beta-Butyrolactone Complex (1:1 molar) | - | 3 | - |
| IPPI-gamma-Caprolactone Complex (1:1 molar) | - | - | 2 |
| **Reactivity** | | | |
| Time to double viscosity @ 23°C, h. | ~45 | ~47 | ~51 |
| Gel time, min. @ 80°C | 80.8 | 80.7 | 120.4 |
| (100g. mass) 120°C | 33.9 | 19.0 | 32.4 |
| 150°C | 15.2 | 9.5 | 26.9 |

The properties of cured 3mm (1/8 castings) measured as set out in Example 2 above, are set out Table 4 below.

TABLE 4

| | H | J | K |
|---|---|---|---|
| Shore D Hardness, 0-10 sec. | 91-90 | 91-89 | 90-88 |
| HDT, °C, at 1.96 MPa | 261.6 | 223.5 | 200.7 |
| Izod Impact strength, J/m | 7.5 | 2.1 | 2.7 |
| Tensile strength, MPa | 19.3 | 23.4 | 29.0 |
| Tensile modulus, MPa | 3248 | 3372 | 3013 |
| Elongation at break % | 0.6 | 0.9 | 1.2 |
| Flexural strength, MPa | 34.5 | 43.8 | 61.7 |
| Flexural modulus, MPa | 2668 | 2724 | 2568 |
| % wt. gain, 24-h. water boil | 1.16 | 1.35 | 1.44 |
| 3-h. acetone boil | 0.01 | 0.20 | 0.00 |

Differences in reactivity of imidazole (IPPI) and IPPI lactone complexes were slight, in contrast to the results with IPMI lactone complexes. Physical properties were much like those obtained with IPMI complexes.

## EXAMPLE 4

A series of 1-methyl imidazole and 1-isopropyl imidazole-lactone complexes L to O was prepared. Their compositions and the properties of 12.5mm castings, cured for 2 hours at 100°C and 4 hours at 210°C, are set out in Table 5 below.

TABLE 5

| | L | M | N | O |
|---|---|---|---|---|
| **Formulation** - parts by weight | | | | |
| Liquid epoxy resin (EEW 185-192) | 100 | 100 | 100 | 100 |
| 1-Methylimidazole (MI) | 1 | - | - | - |
| MI-epsilon-Caprolactone Complex (1:1 molar) | - | 3 | - | - |
| 1-Isopropyl-2-o-Tolylimidazole (IPTI) | - | - | 2 | - |
| IPTI-epsilon-Caprolactone Complex (1:1 molar) | - | - | - | 2 |
| **Reactivity:** | | | | |
| Time to double viscosity @ 23°C, h. | ~24 | ~24 | ~45 | ~46 |
| Gel time, min. @ 80°C | 45.7 | 41.9 | 80.8 | 80.4 |
| 120°C | 15.0 | 13.0 | 33.9 | 18.1 |
| 150°C | 8.7 | 7.6 | 15.2 | 9.2 |
| **Properties:** | | | | |
| Shore D Hardness, 0-10 sec. | 90-88 | 90-88 | 90-89 | 90-89 |
| HDT, °C, | 171.0 | 179.6 | 244.1 | 241.7 |
| Izod Impact strength, J/m | 1.1 | 1.1 | 6.4 | 2.1 |
| Tensile strength, MPa | 31.0 | 28.3 | 26.2 | 23.8 |
| Tensile modulus, MPa | 2751 | 2772 | 2624 | 2992 |
| Elongation at break % | 1.4 | 1.2 | 1.1 | 1.0 |
| Flexural strength, MPa | 46.2 | 44.8 | 30.3 | 48.3 |
| Flexural modulus, MPa | 2644 | 2593 | 2565 | 2593 |
| % wt. gain, 24-h. water boil | 1.39 | 1.62 | 1.19 | 1.38 |
| 3-h. acetone boil | 0.20 | 0.22 | 0.04 | 0.08 |
| Compression strength, MPa | | | | |
| at yield | 103.4 | 100.7 | - | - |
| at failure | 198.6 | 151.7 | - | - |
| % compression at yield | 12.4 | 13.6 | - | - |
| at failure | 32.9 | 26.4 | - | - |
| Modulus, MPa | 1393 | 1324 | - | - |

Results are like those in Example 2. Only small differences were found in reactivity of imidazoles compared with that of imidazole lactone complexes. Physical properties of imidazole-lactone complexes were similar to those obtained with substituted imidazoles in Examples 2 and 3.

| TABLE OF TEST METHODS | |
|---|---|
| Gel Time (minutes) | ASTM D-2471-71 |
| Shore D-Hardness 0-10 seconds | ASTM D-2240 |
| Elongation at Break (%) | ASTM D-638 |
| Heat Deflection Temperature (HDT) | ASTM D-648 |
| Izod Impact Strength | ASTM D-256 |
| Tensile Strength | ASTM D-638 |
| Tensile Modulus | ASTM D-638 |
| Flexural Strength | ASTM D-790 |
| Flexural Modulus | ASTM D-790 |
| Compression Strength at Yield; at Failure | ASTM D-695 |

## Claims

1. A curable composition comprising an epoxy resin, and a curing agent, characterized in that the curing agent comprises a lactone-imidazole complex with mole ratio of lactone:imidazole from 1:5 to 10:1.

2. A composition according to claim 1 characterized in that the mole ratio is from 1:2 to 3:1.

3. A composition according to claim 1 characterized in that the mole ratio is from 1:1 to 2:1.

4. A composition according to any one of claims 1 to 3 characterized in that the lactone has the formula:

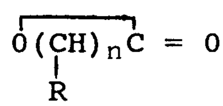

in which n is from 2 to 5 and each R, which may be the same or different, is hydrogen or alkyl having 1 to 18 carbon atoms.

5. A composition according to any one of claims 1 to 4 characterized in that the lactone is beta-butyrolactone, gamma-butyrolactone, epsilon-caprolactone, gamma-caprolactone, propiolactone, delta-valerolactone or pantolactone.

6. A composition according to any one of claims 1 to 5 characterized in that the imidazole has the formula:

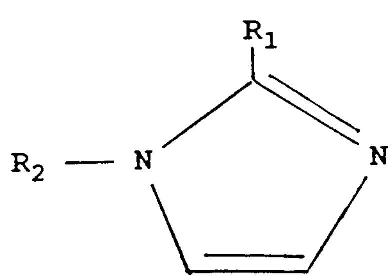

wherein $R_1$ is hydrogen, alkyl having 1 to 18 carbon atoms, or aryl, and $R_2$ is alkyl having 1 to 18 carbon atoms.

7. A composition according to any one of claims 1 to 6 characterized in that the imidazole is 1-isopropyl-2-methyl imidazole, 1-isopropyl-2-phenyl imidazole, 1-isopropyl-2-tolyl imidazole, 1,2-dimethyl imidazole, or 1-methyl imidazole.

**8.** A method of forming a cured epoxy resin product characterized in that a curable composition according to any one of claims 1 to 7 is exposed to curing conditions.

**9.** A method according to claim 8 characterized in that the curing conditions include a temperature from 60 to 250 °C for 1 to 36 hours.